# EUROPÄISCHE PATENTSCHRIFT

(11) **EP 0 521 340 B1**
(45) Veröffentlichungstag und Bekanntmachung des Hinweises auf die Patenterteilung: **23.08.1995**
(21) Anmeldenummer: 92110188.7
(22) Anmeldetag: 17.06.1992
(51) Int. Cl.: B60B 23/12

(54) **Verstellrad zur Einstellung verschiedener Spurbreiten eines Fahrzeuges**
Vehicle-wheel adjustable for varying track
Roue de véhicule réglable pour voie à écartement variable

(30) Priorität: 30.06.1991 DE 9107980 U
(43) Veröffentlichungstag der Anmeldung: 07.01.1993
(73) Patentinhaber: METALLBAU GRASDORF GmbH, D-31188 Holle (DE)
(72) Erfinder: Pyritz, Bernd, Metallbau Grasdorf GmbH, W-3201 Holle OT Sottrum (DE)
(74) Vertreter: König, Norbert, Dipl.-Phys. Dr.

(56) Entgegenhaltungen:
- EP-A- 0 348 613
- US-A- 2 213 063
- US-A- 2 291 156
- US-A- 4 515 411

## Beschreibung

Die Erfindung betrifft ein Verstellrad zur Einstellung verschiedener Spurbreiten eines Fahrzeuges gemäß Oberbegriff des Anspruchs 1.

Es sind Verstellräder bekannt, die nach verschiedenen Systemen verschiedene Spurbreiten ermöglichen. So ist ein Stahlrad bestehend aus Schüssel und Felge, die miteinander verschweißt sind, bekannt, das aber nur zwei verschiedene Spurmöglichkeiten zuläßt.

Ferner sind Räder bekannt, bei denen die Felge stufenlos auf der Schüssel verschoben und geklemmt werden kann. Hierbei sind viele Möglichkeiten zwischen kleinster und größter Spurweite realisierbar. Allerdings weisen diese Räder nur eine geringe Stabilität auf, und die Spurverstellung ist mit großem Aufwand verbunden.

Für die Spurverstellung werden fast ausschließlich heutzutage Räder verwendet, deren Felgen angeschweißte, angeschraubte oder angenietete Halteböcke aufweisen, die mit einer Radschüssel verschraubt werden. Zur Verstellung der Spurbreite wird die Radschüssel umgesetzt. Nachteilig ist die geringe Stabilität und Festigkeit der Schraubverbindung zwischen Schüssel und den Felgenhalteböckchen. Der Lochabstand des Lochkreisrasters ist relativ groß und aufgrund der stets vorhandenen Fertigtoleranzen entstehen leicht größere Seiten- und Höhenschläge beim Betrieb, die große dynamische Belastungen des Rades bewirken. Bei schnellaufenden Schleppern führt dies zu einem schnellen Verschleiß. Diese letztgenannten Verstellräder ermöglichen acht Spurweitenänderungen.

Die Aufgabe der vorliegenden Erfindung besteht darin, ein Verstellrad der eingangs genannten Art so auszubilden, daß unter Beibehaltung einer ausreichenden Zahl von Möglichkeiten der Spurweitenänderung eine größere Stabilität des Verstellrades und damit eine größere Lebensdauer der Felge erreichbar ist.

Diese Aufgabe wird durch die Ausbildung gemäß Kennzeichen des Anspruchs 1 gelöst.

Vorteilhafte und zweckmäßige Weiterbildungen der erfindungsgemäßen Aufgabenlösung sind in den Unteransprüchen gekennzeichnet.

Die erfindungsgemäße Aufgabenlösung sieht zunächst eine Radschüssel und eine Felge vor, die miteinander verschweißt sind. Hierdurch entsteht eine große Stabilität des Rades selbst. Für das Umsetzen zur Erzielung unterschiedlicher Spurweiten ist eine Zusatzschüssel kleinerer Abmessungen vorgesehen, die über einen Lochkreis mit geringem Lochabstand mit der Radschüssel verschraubt wird, so daß sich Fertigungstoleranzen entsprechend geringer hinsichtlich Seiten- und Höhenschlages beim Betrieb auswirken, so daß die dynamische Belastung des Rades wesentlich verringert wird. Die erfindungsgemäße Ausbildung ermöglicht die Vorfertigung des eigentlichen Rades, das die Vorteile eines Festrades hat und die Vorfertigung der Zusatzschüsseln mit variablen Lochkreisrastern für unterschiedliche Achsanschlüsse. Dies erleichtert und verbilligt die Lagerhaltung. Das Befestigungslochraster zwischen Radschüssel und Zusatzschüssel ist fest vorgegeben und kann gleichzeitig als Lochkreis für Zwillingsbereifung verwendet werden.

Die Erfindung soll nachfolgend anhand der beigefügten Zeichnung näher erläutert werden.

Es zeigt:

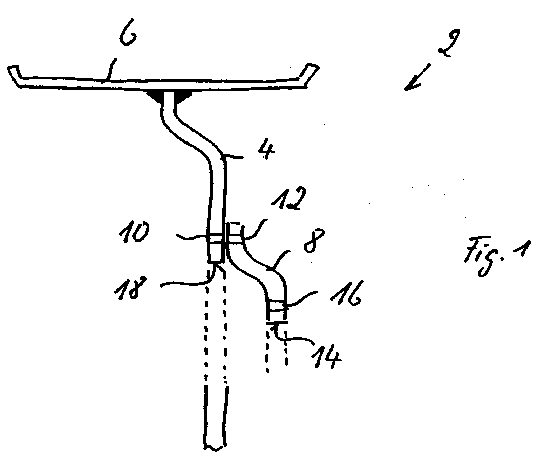

- Fig. 1: schematisch im Schnitt den Aufbau eines Verstellrades und
- Fig. 2a bis 2d: vier an einem Rad mögliche Spuränderungen.

Die Zeichnung zeigt ein Verstellrad 2, bestehend aus einer Radschüssel 4 und einer Felge 6, die miteinander rundum verschweißt sind.

Auf die Radschüssel 4 ist eine Zusatzschüssel 8 aufschraubbar, und zwar über in der Radschüssel und der Zusatzschüssel ausgebildete gleich große Lochkreisraster 10 und 12. Bei einem Durchmesser des Lochkreises von 430 mm können beispielsweise 12 Löcher im Lochkreis zur Verbindung von Radschüssel 4 und Zusatzschüssel 8 vorgesehen sein.

Das Lochkreisraster 10 der Radschüssel 4 dient gleichzeitig als Lochkreis für Zwillingsbereifung.

Die Zusatzschüssel 8 weist um eine zentrale Bohrung 14 einen Lochkreis 16 zum Anschließen an eine Fahrzeugachse auf. Die Radschüssel selbst ist wie üblich ebenfalls mit einer zentralen Bohrung 18 versehen.

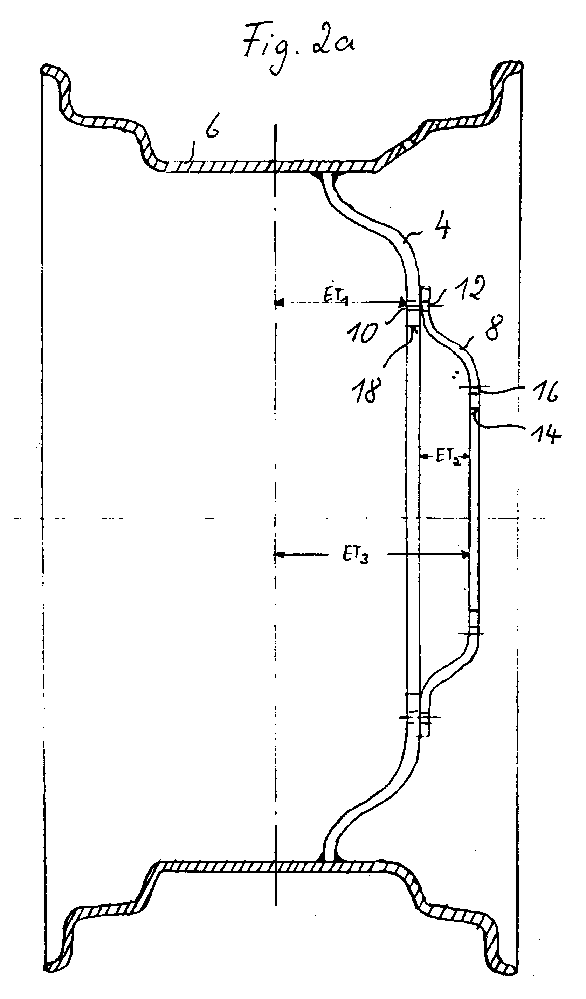

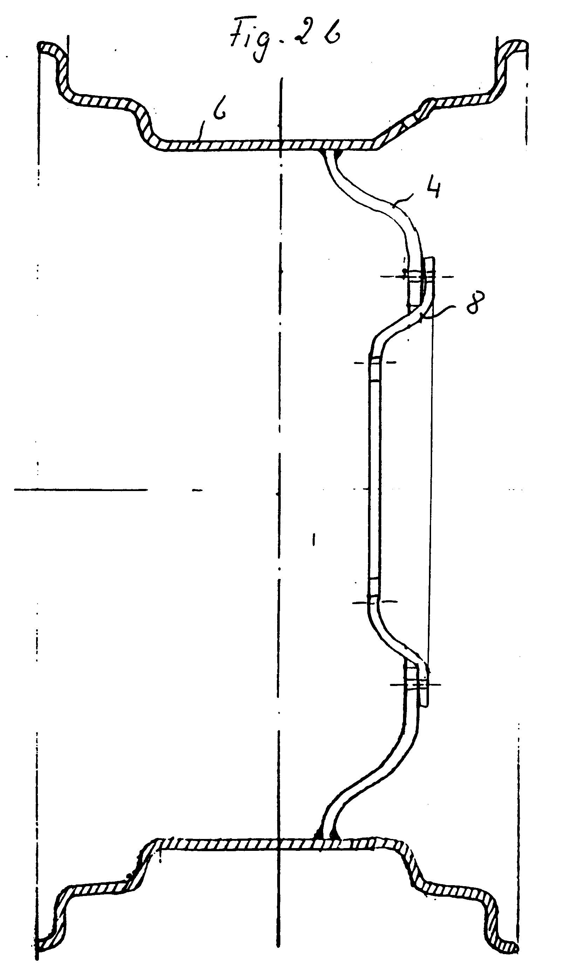

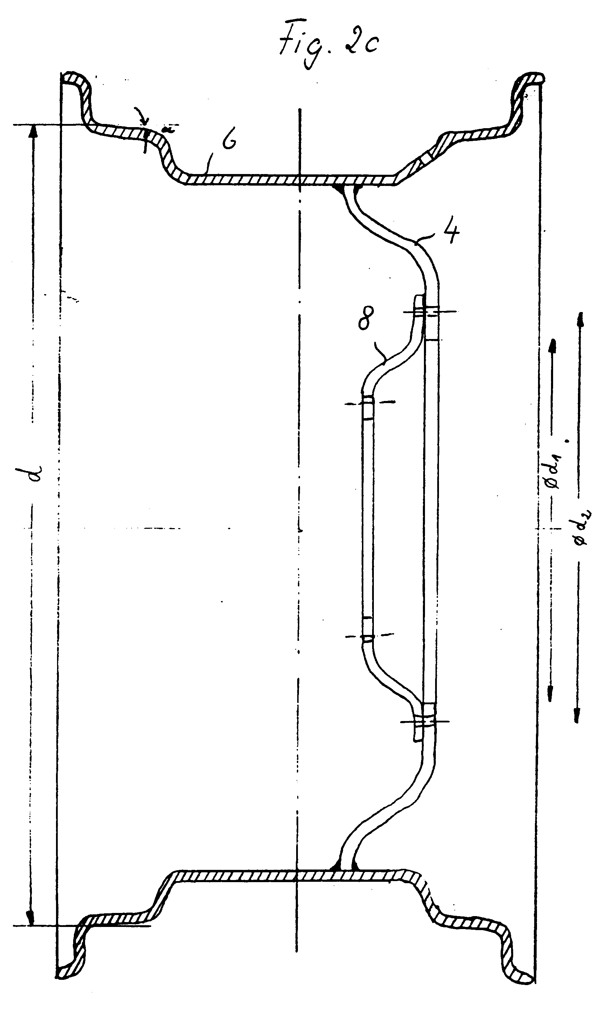

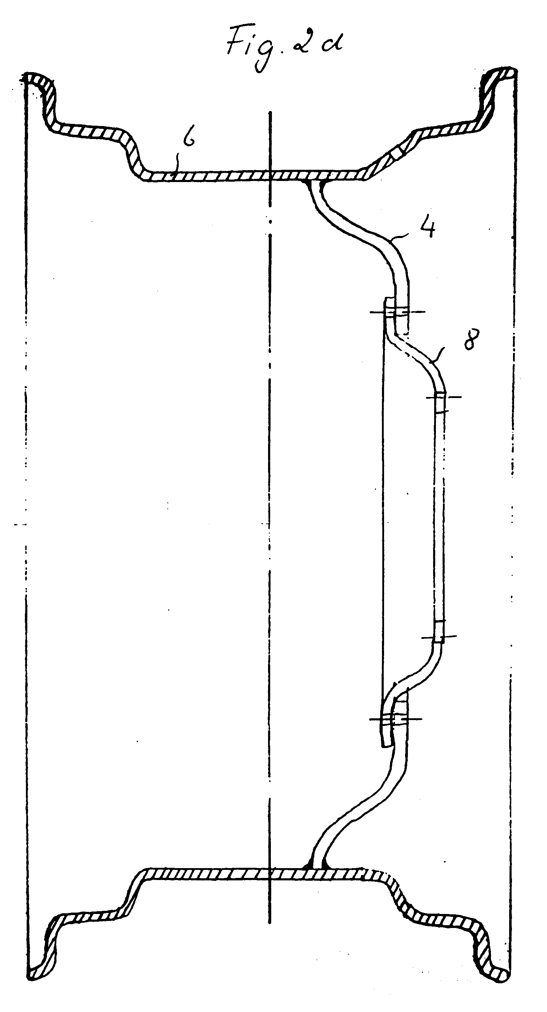

In der Fig. 2a bis 2d sind vier verschiedene Möglichkeiten der Spurweitenänderung mit Hilfe eines Verstellrades dargestellt; es ergeben sich also damit insgesamt acht Möglichkeiten der Spurweitenänderung mit dem beschriebenen Verstellrad.

## Patentansprüche

1. Verstellrad zur Einstellung verschiedener Spurbreiten eines Fahrzeuges, bestehend aus einer Radschüssel und einer Felge, die miteinander verbunden sind, **dadurch gekennzeichnet**, daß die Radschüssel (4) mit der Felge (6) verschweißt ist, und daß zur Einstellung verschiedener Spurbreiten eine Zusatzschüssel (8) vorgesehen ist, die beidseitig auf die Radschüssel (4) aufschraubbar ist und die mit einem Lochkreis (16) zum Anschließen an die Fahrzeugachse ausgestattet ist.

2. Verstellrad nach Anspruch 1, **dadurch gekennzeichnet**, daß für die Schraubverbindung von Radschüssel (4) und Zusatzschüssel (8) gleiche, vorgegebene Befestigungslochkreisraster (10, 12) in der Radschüssel und der Zusatzschüssel vorgesehen sind.

3. Verstellrad nach Anspruch 1 oder 2, **dadurch gekennzeichnet**, daß Zusatzschüsseln (8) mit unterschiedlichen Lochkreisrastern (16) für die verschiedenen Achsanschlüsse vorgesehen sind.

4. Verstellrad nach Anspruch 1, **dadurch gekennzeichnet,** daß die Radschüssel mit der Felge rundum verschweißt ist.

## Claims

1. An adjustable wheel of a vehicle for varying track widths, consisting of a wheel disc and a rim, which are connected to one another,
**characterised in that** the wheel disc (4) is welded to the rim (6),
**and in that** to vary track widths an additional disc (8) is provided, which can be screwed onto the wheel disc (4) at both sides and which is equipped with a hole circle (16) for connection to the vehicle axle.

2. An adjustable wheel according to Claim 1,
**characterised in that** identical, predetermined attachment hole circle grids (10, 12) are provided in the wheel disc and the additional disc for the screw connection of the wheel disc (4) and additional disc (8).

3. An adjustable wheel according to Claim 1 or 2,
**characterised in that** additional discs (8) are provided with different hole circle grids (16) for the various axle connections.

4. An adjustable wheel according to Claim 1,
**characterised in that** the wheel disc is welded all around to the rim.

## Revendications

1. Roue ajustable pour le réglage de diverses largeurs de voie d'un véhicule, constituée d'un voile de roue et d'une jante qui sont reliés ensemble,
caractérisée en ce que le voile de roue (4) est soudé à la jante (6) et que, pour le réglage de diverses largeurs de voie, un voile additionnel (8) est prévu, qui peut être vissé des deux côtés sur le voile de roue (4) et qui est équipé d'un cercle de trous (16) pour le raccordement à l'axe du véhicule.

2. Roue ajustable selon la revendication 1,
caractérisée en ce que des réseaux de cercles de trous (10,12) de fixation identiques prédéfinis sont prévus dans le voile de roue et le voile additionnel pour la liaison par vissage du voile de roue (4) et du voile additionnel (8).

3. Roue ajustable selon la revendication 1 ou 2,
caractérisée en ce que des voiles additionnels (8) avec des réseaux de cercles de trous (16) différents sont prévus pour les divers raccordements d'axes.

4. Roue ajustable selon la revendication 1,
caractérisée en ce que le voile de roue est soudé tout autour à la jante.
